# EUROPÄISCHE PATENTSCHRIFT

(11) **EP 4 514 633 B1**
(45) Veröffentlichungstag und Bekanntmachung des Hinweises auf die Patenterteilung: **18.11.2026**
(21) Anmeldenummer: 23712797.2
(22) Anmeldetag: 10.03.2023
(51) Int. Cl.: B60C 11/12, B60C 11/03, B60C 11/13

(54) **FAHRZEUGLUFTREIFEN MIT PROFILIERTEM LAUFSTREIFEN**
VEHICLE TIRE WITH PROFILED TREAD
PNEU DE VÉHICULE À BANDE DE ROULEMENT PROFILÉE

(30) Priorität: 29.04.2022 DE 102022204215
(43) Veröffentlichungstag der Anmeldung: 05.03.2025
(73) Patentinhaber: Continental Reifen Deutschland GmbH, 30175 Hannover (DE)
(72) Erfinder: HERBST, Stephan, 30175 Hannover (DE); BEHR, Ulrich, 30175 Hannover (DE); KHOO, Jan-Sen, 30175 Hannover (DE)
(74) Vertreter: Continental Corporation
(86) Internationale Anmeldenummer: PCT/DE2023/200052
(87) Internationale Veröffentlichungsnummer: WO 2023/208296

(56) Entgegenhaltungen:
- WO-A1-2016/125814
- WO-A1-2016/128085
- WO-A1-2020/209114
- CN-A- 114 144 318

## Beschreibung

Die Erfindung betrifft einen Fahrzeugluftreifen aufweisend einen profilierten Laufstreifen mit zumindest einem von zwei Umfangsrillen axial begrenzten schulterseitigen Profilband, bevorzugt ausgeführt als eine Umfangsrippe oder als eine Profilblockreihe, welches zumindest eine in die beiden axial begrenzenden Umfangsrillen in jeweils einer Einmündung mündende Rille mit einer radialen Rillentiefe T von weniger als 100 % einer Profiltiefe T* aufweist, wobei die Rille zwei in radialer Richtung rR ausgerichtete einander gegenüberliegende Rillenwände aufweist und radial außen in Rillenkanten an einer Laufstreifenoberfläche endet.

Es ist üblich, Profilbänder von Laufstreifen mit Rillen zu versehen, um die Entwässerung des Profilbandes in die begrenzenden Umfangsrillen zu ermöglichen und somit ein Aufschwimmen bei Nässe zu verhindern. Der Bodenkontakt zwischen Laufstreifenoberfläche und Fahrbahn soll dabei so lange wie möglich gewahrt bleiben, um Längs- und Querkräfte weiter übertragen zu können.

Die Rillen verbessern über die zusätzlichen Kanten die Nassbremseigenschaften weiter. Eine ungleiche Verteilung von Rillen im profilierten Laufstreifen führt allerdings zu Steifigkeitssprüngen und damit zu einem ungleichmäßigen Abriebsbild.

Die WO 2020/209114 A1 offenbart einen Fahrzeugluftreifen aufweisend einen profilierten Laufstreifen.

Die DE 102004034116 A1 offenbart einen profilierten Laufstreifen aufweisend ein Profilband mit einer Rille, die von einer Umfangsrille zur anderen Umfangsrille mit einer zunehmenden Dicke ausgeführt ist, wodurch Steifigkeitssprünge verringert sind.

Die Rillen verringern allerdings auch die Kontaktfläche des Reifens zur Fahrbahn, was die Trockenhaftung verschlechtert. Um diesen Zielkonflikt auszugleichen, ist es bekannt, dass die Rillen aufweitende Fasen aufweisen, welche das Einrollen der Rillenkanten beim Bremsen vermeiden und somit die Trockenbremseigenschaften verbessern.

Aufgabe ist es daher, den Zielkonflikt zwischen Nässeeigenschaften, Trockenbremsen und Abriebsbild zu verbessern.

Dies wird dadurch erreicht, dass die Rille in ihrer axialen Erstreckung von axial außen nach axial innen aus den folgenden fünf Abschnitten gebildet ist:
- ein äußerer Abschnitt angrenzend an die axial außen begrenzende Umfangsrille der Umfangsrillen,
- ein äußerer Übergangsabschnitt ,
- ein mittlerer Abschnitt ,
- ein innerer Übergangsabschnitt ,
- ein innerer Abschnitt angrenzend an die axial innen begrenzende Umfangsrille der Umfangsrillen,
- wobei der äußere Abschnitt, der mittlere Abschnitt sowie der innere Abschnitt jeweils eine erste Länge von 20% bis 40%, bevorzugt von 25% bis 35%, einer Länge der Rille aufweisen und
- wobei der äußere Übergangsabschnitt und der innere Übergangsabschnitt jeweils eine zweite Länge von 0% bis 10% der Länge der Rille aufweisen.

Der Fahrzeugluftreifen zeichnet sich weiter dadurch aus, dass die Rille im äußeren Abschnitt eine konstante erste Rillenbreite von 0,4 mm bis 1,0 mm aufweist, dass die Rille einen im mittleren Abschnitt und im inneren Abschnitt eine gleiche konstante zweite Rillenbreite von 0,6 mm bis 1,2 mm aufweist, welche um mindestens 0,2 mm größer ist als die erste Rillenbreite , dass die Rillenwände im äußeren Abschnitt radial außen mit der jeweiligen Rillenkante abschließen, dass die Rille im mittleren Abschnitt und im inneren Abschnitt jeweils eine an die Rillenwände radial außen anschließende die Rille zur Laufstreifenoberfläche aufweitende Rillenverbreiterung aufweist, welche radial außen mit den Rillenkanten abschließt und dass die Rillenkanten im mittleren Abschnitt einen konstanten zweiten Kantenabstand von 1,6 mm bis 2,2 mm aufweisen, der um 0,5 mm bis 1,5 mm kleiner ist als ein konstanter dritter Kantenabstand von 2,2 mm bis 3,2 mm der Rillenkanten im inneren Abschnitt .

Erstaunlicherweise hat es sich gezeigt, dass ein Profilband aufweisend eine solche Rille der genannten Abfolge aus Kantenabstand und Rillenverbreiterung den Zielkonflikt zwischen Nässeeigenschaften, Trockenbremsen und Abrieb auf einem höheren Niveau löst.

Im äußeren Abschnitt der Rille schließen die Rillenwände radial außen direkt mit der jeweiligen Rillenkante ab. Die Rille ist im äußeren Abschnitt somit ohne radial äußere Rillenverbreiterung ausgeführt. Im äußeren Abschnitt ermöglicht die mit der ersten Rillenbreite von 0,4 mm bis 1,0 mm vergleichsweise schmale Rille ohne Rillenverbreiterung bei großer Reifenaufstandsfläche eine ausreichende Wasserabführung direkt in die axial außen begrenzende Umfangsrille bzw. zu den axial innerhalb liegenden Abschnitten der Rille, sowie eine vorteilhafte geringe Geräuschentwicklung. Gleichzeitig ermöglicht die schmale Ausführung der Rille im äußeren Abschnitt angrenzend an die axial außen begrenzende Umfangsrille eine hohe Steifigkeit des Profilbandes, wodurch vorteilhafte Trockenbrems- und Handlingeigenschaften ermöglicht sind.

Der äußere Abschnitt ist somit vorrangig bezüglich Trockenbremseigenschaften und Handling bei gleichzeitig ausreichenden Nasseigenschaften optimiert.

Im mittleren Abschnitt und im inneren Abschnitt sorgt die im Vergleich zur ersten Rillenbreite um mindestens 0,2 mm vergrößerte zweite Rillenbreite von 0,6 mm bis 1,2 mm sowie die radial außerhalb der Rillenwände angeordnete Rillenverbreiterung für ein vorteilhaft vergrößertes Rillenvolumen zur Wasserabführung in die axial innen begrenzende Umfangsrille. Gleichzeitig führt die verbreiterte Rille zu vorteilhafter Kantenbildung und damit positiven Nassbremseigenschaften. Die Vergrößerung des Kantenabstandes vom zweiten Kantenabstand von 1,6 mm bis 2,2 mm im mittleren Abschnitt um 0,5 mm bis 1,5 mm zum dritten Kantenabstand von 2,2 mm bis 3,2 mm im inneren Abschnitt führt zu einer weiteren Verbesserung der genannten Eigenschaften nach axial innen. Der mittlere Abschnitt und der innere Abschnitt der Rille sind somit vorrangig bezüglich der Nasseigenschaften unter Berücksichtigung der Trockenbremseigenschaften sowie noch ausreichender Steifigkeit optimiert.

Der Anstieg des Kantenabstands der Rille in dem jeweils auf eine Länge von lediglich 0% bis 10 % der Länge der Rille begrenzten inneren Übergangsgabschnitt um mindestens 0,5 mm bis 1,5 mm vom geringen konstanten zweiten Kantenabstand im inneren Abschnitt zum konstanten dritten Kantenabstand im inneren Abschnitt sorgt in dem in seiner axialen Erstreckung stark begrenzten Übergangsabschnitte für eine Wasserverwirbelung, die einen Unterdruck generiert, der zu einer zusätzlichen Beschleunigung des Wasserabflusses in die axial innen begrenzende Umfangsrillen führt (Venturi Effekt).

Der Anstieg der Rillenbreite von der ersten konstanten Breite im äußeren Abschnitt zur konstanten zweiten Breite im mittleren und im inneren Abschnitt führt zu einer vorteilhaften Zunahme der Steifigkeit des Profilbandes nach axial außen und vermindert einen Steifigkeitssprung zur in der Regel steiferen Reifenschulter.

Somit hat es sich gezeigt, dass sich erstaunlicherweise durch die Abstimmung der gezielt auf unterschiedliche Eigenschaften optimierten Abschnitte eine ausreichend gute Kantenbildung und ein daraus folgendes Nassbremsverhalten, sowie ebenfalls gute Trockenbrems- und Handlingeigenschaften einstellen. Der Zielkonflikt ist auf einem höheren Niveau gelöst.

Die Kantenabstände sind jeweils gemessen parallel zur Laufstreifenperipherie senkrecht zu einer Längserstreckung der Rille. Die erste Rillenbreite als auch die zweite Rillenbreite sind jeweils gemessen im Bereich der Rillenwände parallel zur Laufstreifenperipherie senkrecht zu einer Längserstreckung der Rille.

Die Länge der Rille sowie die Längen der einzelnen Abschnitte der Rille sind gemessen entlang der Laufstreifenperipherie in Längserstreckung der Rille, insbesondere gemessen entlang einer Mittenebene der Rille. Die Mittenebene verläuft entlang der Linie Z-Z und in radialer Richtung rR.

Zweckmäßig ist es, wenn die Rille in einem Winkel von 45° bis 65°, bevorzugt von 55°, zur Umfangsrichtung U ausgerichtet ist.

Eine vorteilhafte Ausführungsform ist dadurch gegeben, dass die Rillenverbreiterung im inneren Abschnitt und/oder im mittleren Abschnitt symmetrisch zur Längserstreckung der Rille ausgebildet sind.

Die Mittenebene verläuft bezogen auf eine Längserstreckung der Rille durch die Mitte der Rille und in radialer Richtung rR. Insbesondere bei einem asymmetrisch profilierten Laufstreifen, welcher richtungsungebunden ist, ist die Rillenverbreiterung somit zur Montage an beiden Fahrzeugseiten optimiert.

Eine vorteilhafte Ausführungsform ist dadurch gegeben, dass sich die Rillenverbreiterung bis zu einer, über die Längserstreckung der Rille insbesondere konstanten, radialen Tiefe von 0,8 mm bis 1,5 mm, bevorzugt von 0,8 mm bis 1,2 mm, besonders bevorzugt von 1,0 mm, erstreckt.

Es hat sich herausgestellt, dass diese radiale Tiefe der Rillenverbreiterung der beste Kompromiss im Zielkonflikt von geringem Abrollgeräusch, Trockenbremsen und einer guten Wasserableitung für Aquaplaning ist. Besonders vorteilhaft ist es, wenn die radiale Tiefe der Rillenverbreiterung weitgehend konstant über die gesamte Rillenverbreiterung ausgebildet ist.

Eine vorteilhafte Ausführungsform ist dadurch gegeben, dass sich ein vierter Kantenabstand der Rillenkanten im äußeren Übergangsabschnitt und/oder im inneren Übergangsabschnitt, bevorzugt zumindest im inneren Übergangsabschnitt von axial außen nach axial innen jeweils kontinuierlich, bevorzugt linear oder s-förmig, und/oder diskontinuierlich, insbesondere in einem einzigen Sprung, verringert.

Über die Ausgestaltung des Übergangsabschnitts ist die Wasserverwirbelung vorteilhaft einstellbar.

Eine kontinuierliche Verringerung des jeweiligen vierten Kantenabstandes erfolgt über eine endliche Länge, weshalb die jeweilige zweite Länge des jeweiligen Übergangsabschnitts in diesem Fall größer als 0 ist.

Eine diskontinuierliche Verringerung des jeweiligen vierten Kantenabstandes in einem einzigen Sprung kann bei einer zweiten Länge von 0 mm realisiert sein.

Eine vorteilhafte Ausführungsform ist dadurch gegeben, dass die radiale Rillentiefe T im mittleren Abschnitt und im inneren Abschnitt um mindestens 1 mm bis 3 mm größer ist als im äußeren Abschnitt, bevorzugt die radiale Rillentiefe T zudem im mittleren Abschnitt geringer ist als im inneren Abschnitt.

Eine derartige Zunahme der radialen Rillentiefe T von axial außen zur axial innen begrenzenden Umfangsrille hin verbessert das Ableitvermögen in diese Umfangsgrille zusätzlich.

Die Zunahme der radialen Rillentiefe kann einen Sprung der radialen Rillentiefe und/oder zumindest einen Abschnitt mit einem kontinuierlichen Zuwachs der radialen Rillentiefe umfassen.

Eine vorteilhafte Ausführungsform ist dadurch gegeben, dass der zweite Kantenabstand im mittleren Abschnitt 1,8 mm bis 2,0 mm, bevorzugt 1,9 mm, beträgt und/oder dass der dritte Kantenabstand im inneren Abschnitt 2,5 mm bis 2,9 mm, bevorzugt 2,7 mm beträgt.

Eine vorteilhafte Ausführungsform ist dadurch gegeben, dass der zweite Kantenabstand im mittleren Abschnitt 1,8 mm bis 2,0 mm, bevorzugt 1,9 mm, beträgt. Hierdurch ist der innere Abschnitt besonders gut bezüglich der Geräuschentwicklung unter Berücksichtigung Nasseigenschaften und Trockenbremseigenschaften optimiert.

Eine vorteilhafte Ausführungsform ist dadurch gegeben, dass der dritte Kantenabstand im inneren Abschnitt 2,5 mm bis 2,9 mm, bevorzugt 2,7 mm, beträgt. Hierdurch ist der jeweilige Randabschnitt der Rille besonders gut bezüglich der Nasseigenschaften unter Berücksichtigung von Geräuschentwicklung und Trockenbremseigenschaften optimiert.

Eine vorteilhafte Ausführungsform ist dadurch gegeben, dass die erste Rillenbreite im äußeren Abschnitt 0,5 mm bis 0,6 mm beträgt und/oder dass die zweite Rillenbreite im mittleren Abschnitt und im inneren Abschnitt 0,8 mm bis 1,0 mm beträgt.

Eine derart geringe erste Rillenbreite im äußeren Abschnitt ermöglicht eine Wasserabführung in die axial außen begrenzende Umfangsrille bei gleichzeitig hoher Steifigkeit.

Eine solche zweite Rillenbreite ermöglicht eine gute Wasserabführung nach axial innen bei gleichzeitig geringem negativen Einfluss auf das Fahrzeuggeräusch.

Eine vorteilhafte Ausführungsform ist dadurch gegeben, dass sich die Rille im äußeren Abschnitt oder im äußeren, mittleren und inneren Abschnitt radial innerhalb an die Rillenwände anschließend in einem Rillengrund endend verjüngt.

Hierdurch ergibt sich eine besonders einfache Rille. Eine besonders einfache Herstellbarkeit der Rille ergibt sich dabei bei einer konstanten radialen Rillentiefe T im jeweiligen Abschnitt. Die radiale Rillentiefe T kann aber auch zu den Einmündungen hin zunehmend ausgeführt sein.

Eine vorteilhafte Ausführungsform ist dadurch gegeben, dass sich die Rille radial innerhalb der Rillenwände zumindest im mittleren Abschnitt sowie bis zur axial innen begrenzenden Umfangsrille in einen Kanal aufweitet, der sich bevorzugt zur axial innen begrenzenden Umfangsrille hin aufweitet.

Ein solcher sich in Richtung der axial innen begrenzenden Umfangsrille vergrößerter und in diese mündender Kanal verbessert die Abführung des Wassers zur axial innen begrenzenden Umfangsrille weiter.

Eine vorteilhafte Ausführungsform ist hierbei dadurch gegeben, dass der äußere Übergangsabschnitt als lokale Verdickung der Rille ausgebildet ist, die sich von einer Öffnung der Laufstreifenoberfläche bis zu dem Kanal erstreckt und, insbesondere knickfrei, in diesen mündet.

Hierdurch ist die Wasserabführung zum Kanal und durch diesen in die axial innen begrenzende Umfangsrille hin weiter verbessert bei gleichzeitig geringer Geräuschentwicklung.

Eine vorteilhafte Ausführungsform ist dadurch gegeben, dass das Profilband einen Einschnitt aufweist, welcher die Rille, insbesondere im äußeren Übergangsabschnitt, schneidet, weitgehend in Umfangsrichtung U verläuft und dabei vor einer benachbarten Vertiefung, insbesondere Rille, endet. Der Einschnitt kann eine Tiefe von 1 mm bis 3 mm, bevorzugt von 1,2 mm bis 1,8 mm, besonders bevorzugt von 1,5 mm, aufweisen.

Die Einschnitte dienen ebenfalls der Wasserabführung um einen möglichst großen Oberflächenbereich des Profilbands abzudecken. Das über den Einschnitt gesammelte Wasser wird über die Rille, sowie insbesondere über die lokale Verdickung und/oder den Kanal, in die axial innen begrenzende Umfangsrille abgeführt. Dabei haben die in Umfangsrichtung verlaufenden Elemente nur einen sehr geringen negativen Einfluss auf das Vorbeifahrgeräusch.

Zweckmäßig ist es, wenn in Umfangsrichtung U jede zweite Rille von einem solchen Einschnitt geschnitten wird.

Eine vorteilhafte Ausführungsform ist dadurch gegeben, dass die axial außen begrenzende Umfangsrille ein äußeres weiteres Profilband begrenzt, welches eine geschlossene Wand zu der begrenzenden Umfangsrille aufweist.

Das äußere weitere Profilband weist somit keine in die axial außen begrenzende Umfangsrille mündenden Einkerbungen auf. Das äußere weitere Profilband kann ein axial äußerstes Profilband, insbesondere eine Schulterrippe, sein.

Hierdurch ist ein geringer Steifigkeitsunterschied zwischen einem den äußeren Abschnitt mit einem geringen Rillenvolumen aufweisenden unmittelbar an die axial außen begrenzende Umfangsrille angrenzenden Profilbandabschnitt des Profilbandes und der frei von einmündenden Einschnitten ausgebildeten Wand des äußeren weiteren Profilbandes ermöglicht, was sich positiv auf den Abrieb und das Handling auswirkt.

Eine vorteilhafte Ausführungsform ist dadurch gegeben, dass die axial innen begrenzende Umfangsrille ein inneres weiteres Profilband mit zumindest einem in die axial innen begrenzende Umfangsrille mündenden Einkerbung begrenzt, wobei die Einkerbung in Umfangsrichtung U insbesondere zwischen den Einmündungen von zwei aufeinanderfolgenden Rillen in die das Profilband axial innen begrenzende Umfangsrille mündet.

Hierdurch ist ein geringer Steifigkeitsunterschied zwischen einem den inneren Abschnitt mit einem großen Rillenvolumen aufweisenden unmittelbar an die axial innen begrenzende Umfangsrille angrenzenden Profilbandabschnitt des Profilbandes und dem einmündende Einschnitte aufweisenden inneren weiteren Profilband ermöglicht, was sich positiv auf den Abrieb und das Handling auswirkt.

Bei dem Reifen handelt es sich um einen Fahrzeugluftreifen, insbesondere radialer Bauart. Bevorzugt handelt es sich dabei um einen PKW-, Van- oder Light-Truck Reifen oder einen Zweiradreifen. Derartige Reifen profitieren besonders durch die vorteilhaften Entwässerungseigenschaften. Besonders bevorzugt handelt es sich um einen PKW-Luftreifen radialer Bauart.

Der erfindungsgemäße Reifen aufweisend den vorteilhaft profilierten Laufstreifen ist mittels formgebender Vulkanisation unter Verwendung eines Lamellenblech, welches in einem Formteil oder einem Formsegment einer

Reifenvulkanisationsform befestigt ist und einen ein Profilnegativ im Laufstreifen formenden Blechteil und einen im Formteil bzw. Formsegment verankerbaren Blechteil aufweist, wobei der das Profilnegativ formende Blechteil als Negativkontur der auszuformenden erfindungsgemäßen Rille ausgeführt ist, herstellbar.

Alle in dieser Beschreibung wiedergegebenen Ausführungsformen der erfindungsgemäßen Fahrzeugluftreifen stellen Beispiele der Ausgestaltung der Erfindung dar und sind nicht einschränkend zu sehen. Entsprechend sind auch durch einzelne oder mehrere Merkmale einer Ausführungsform alleine oder die Kombination der Merkmale verschiedener Ausführungsformen weitere Ausführungsformen der Erfindung gegeben, die Gegenstand der Erfindung sind, soweit diese nicht explizit anders in der Beschreibung erläutert wird. Ferner sind auch Kombinationen von bevorzugten und besonders bevorzugten Ausführungsformen untereinander miteinander kombinierbar.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 eine Draufsicht auf einen Abschnitt eines erfindungsgemäßen Laufstreifens; Fig. 1A ein Ausschnitt der Fig. 1;
Fig. 2 einen Querschnitt entlang der Linie X-X der Fig. 1;
Fig. 3 einen Querschnitt entlang der Linie Y-Y der Fig. 1;
Fig. 4 einen Querschnitt entlang der Linie W-W der Fig. 1;
Fig. 5 eine Ansicht auf einen entlang der Linie Z-Z der Fig. 1 verlaufenden Schnitt des Laufstreifens.

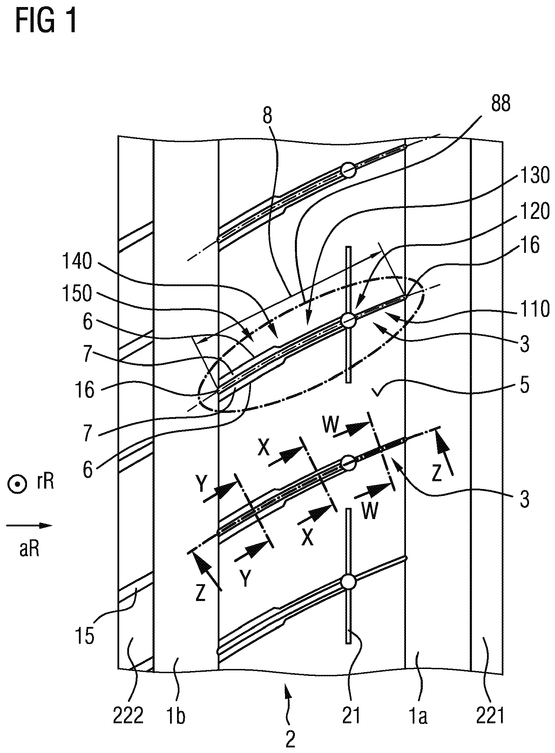

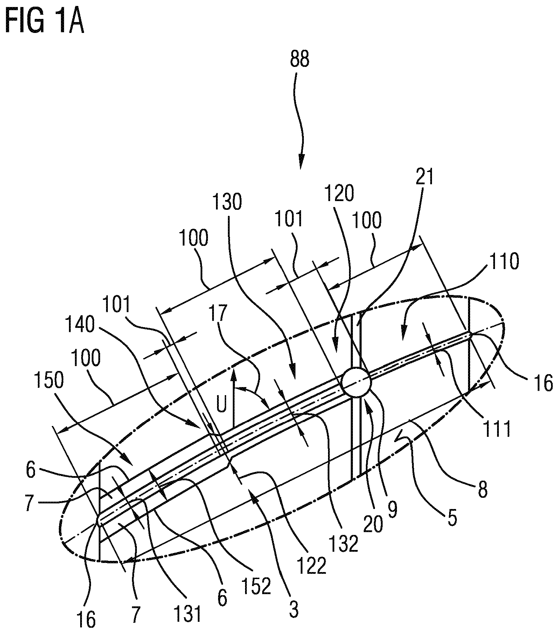

Die Fig. 1 zeigt eine Draufsicht auf einen Abschnitt eines Fahrzeugluftreifen aufweisend einen profilierten Laufstreifen mit zumindest einem von zwei Umfangsrillen 1a, 1b axial begrenzten schulterseitigen Profilband 2, hier eine Umfangsrippe. Alternativ kann das Profilband auch als Profilblockreihe ausgeführt sein. Das Profilband 2 weist zumindest eine in die beiden axial begrenzenden Umfangsrillen 1a, 1b in jeweils einer Einmündung 16 mündende Rille 3 mit einer radialen Rillentiefe T weniger als 100 % einer Profiltiefe T* auf. Die Rille 3 kann in einem Winkel 17 von 45° bis 65°, bevorzugt von 55°, zur Umfangsrichtung U ausgerichtet sein. Die Fig. 1A zeigt den Ausschnitt 88 der Fig. 1.

Die Rille 3 weist zwei in radialer Richtung rR ausgerichtete einander gegenüberliegende Rillenwände 4 auf und endet radial außen in Rillenkanten 6 an einer Laufstreifenoberfläche 5.

Die Rille 3 ist in ihrer axialen Erstreckung von axial außen nach axial innen aus den folgenden fünf Abschnitten gebildet:
- Ein äußerer Abschnitt 110 angrenzend an die axial außen begrenzende Umfangsrille 1a der Umfangsrillen,
- ein äußerer Übergangsabschnitt 120,
- ein mittlerer Abschnitt 130,
- ein innerer Übergangsabschnitt 140 und
- ein innerer Abschnitt 150 angrenzend an die axial innen begrenzende Umfangsrille 1b der Umfangsrillen.

Der äußere Abschnitt 110, der mittlere Abschnitt 130 sowie der innere Abschnitt 150 weisen jeweils eine erste Länge 100 von 20% bis 40%, bevorzugt von 25% bis 35%, einer Länge 8 der Rille 3 auf. Die Abschnitte 110, 130, 150 können dabei eine unterschiedliche erste Länge 100 oder alle dieselbe erste Länge 100 aufweisen. Der äußere Übergangsabschnitt 120 und der innere Übergangsabschnitt 140 weisen jeweils eine zweite Länge 101 von 0% bis 10% der Länge 8 der Rille auf. Die Übergangsabschnitte 120, 140 können dabei eine unterschiedliche zweite Länge 101 oder alle dieselbe zweite Länge 101 aufweisen.

Die Rille 3 weist im äußeren Abschnitt 110 eine konstante erste Rillenbreite 111 von 0,4 mm bis 1,0 mm auf.

Die Rille 3 weist einen im mittleren Abschnitt 130 und im inneren Abschnitt 150 eine gleiche konstante zweite Rillenbreite 131 von 0,6 mm bis 1,2 mm auf, welche um mindestens 0,2 mm größer ist als die erste Rillenbreite 111.

Die Rillenwände 4 schließen im äußeren Abschnitt 110 radial außen mit der jeweiligen Rillenkante 6 ab. Die Rille 3 weist im mittleren Abschnitt 130 und im inneren Abschnitt 150 jeweils eine an die Rillenwände 4 radial außen anschließende die Rille zur Laufstreifenoberfläche 5 hin aufweitende Rillenverbreiterung 7 auf, welche radial außen mit den Rillenkanten 6 abschließt.

Die Rillenkanten 6 im mittleren Abschnitt 150 weisen einen konstanten zweiten Kantenabstand 132 von 1,6 mm bis 2,2 mm auf, der um 0,5 mm bis 1,5 mm kleiner ist als ein konstanter dritter Kantenabstand 152 von 2,2 mm bis 3,2 mm der Rillenkanten 6 im inneren Abschnitt 150.

Die Kantenabstände, insbesondere der vierte Kantenabstand 122, der zweite Kantenabstand 132 und der dritte Kantenabstand 152, sowie die Rillenbreiten, insbesondere der erste Rillenbreite 111 und der zweite Rillenbreite 131, sind jeweils gemessen parallel zu einer Laufstreifenperipherie senkrecht zu einer Längserstreckung der Rille 3. Die erste Rillenbreite 111 als auch die zweite Rillenbreite 131 sind jeweils gemessen im Bereich der Rillenwände 4.

Die Länge 8 der Rille sowie die Längen der einzelnen Abschnitte der Rille, insbesondere die erste Länge 100 und die zweite Länge 101, sind gemessen entlang der Laufstreifenperipherie in Längserstreckung der Rille.

Das Profilband 2 kann in Umfangsrichtung U beabstandete und über den Umfang verteilt angeordnete derartige Rillen 3 aufweisen. Die Rillen 3 können alle gleich ausgeführt sein. Es können aber zumindest zwei Rillen voneinander verschieden ausgeführt sein. Der in der Fig. 1 dargestellte Abschnitt weist zwei in Umfangsrichtung U beabstandete zueinander parallele Rillen 3 auf. Die dargestellten Rillen 3 sind in ihren geometrischen Eigenschaften gleich ausgeführt.

Die Figuren 1 bis 5 und 1A zeigen eine vorteilhafte Ausführung der Erfindung, welche im Folgenden beschrieben wird. Die Erfindung ist nicht auf diese Ausführung beschränkt.

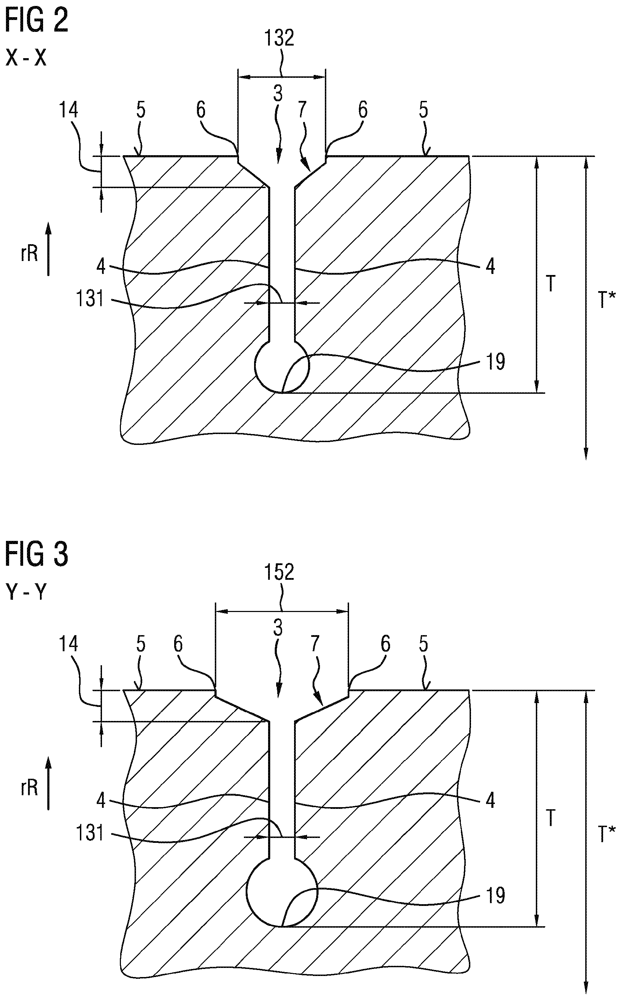

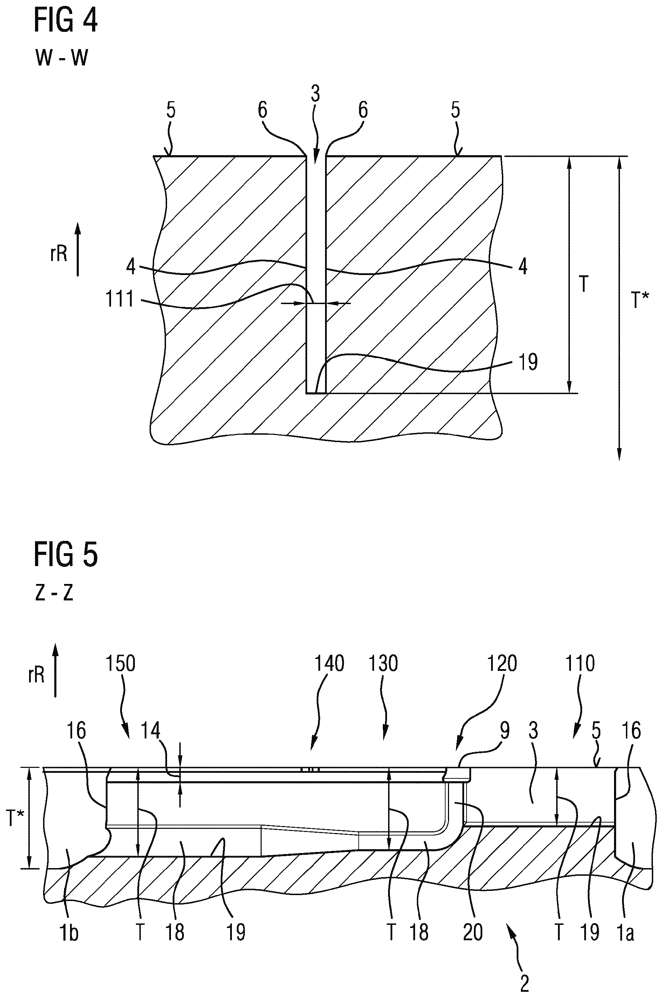

Die Fig. 2 stellt einen Querschnitt der Rille 3 im mittleren Abschnitt 130 entlang der Linie X-X der Fig. 1 dar. Die Fig. 3 stellt einen Querschnitt der Rille 3 im inneren Abschnitt 150 entlang der Linie Y-Y der Fig. 1 dar. Die Fig. 4 stellt einen Querschnitt der Rille 3 im äußeren Abschnitt 110 entlang der Linie W-W der Fig. 1 dar.

Die Fig. 5 zeigt eine Ansicht auf einen entlang der Linie Z-Z der Fig. 1 verlaufenden Schnitt des Laufstreifens. Die Linie Z-Z der Fig. 1 verläuft dabei, bezogen auf eine Längserstreckung der Rille, durch die Mitte der Rille 3. Der dargestellte Schnitt verläuft durch die Mittenebene der Rille, d.h. entlang der Linie Z-Z der Fig. 1 und in radialer Richtung rR.

Wie in Fig. 2 und Fig. 3 dargestellt, kann die Rillenverbreiterung 7 zwei einander gegenüberliegende jeweils radial außen an die Rillenwände 6 anschließende Fasen aufweisen.

Wie in der Fig. 2 dargestellt kann die Rillenverbreiterung 7 im inneren Abschnitt 11 sind symmetrisch zur Längserstreckung der Rille 3 ausgebildet sein.

Die Rillenverbreiterung 7 kann sich nach radial innen bis zu einer, über die Längserstreckung der Rille radialen Tiefe 14 von 0,8 mm bis 1,5 mm, bevorzugt von 0,8 mm bis 1,2 mm, besonders bevorzugt von 1,0 mm, erstrecken. Wie in den Figuren 2, 3 und 4 dargestellt, kann die radiale Tiefe 14 konstant ausgebildet sein.

Ein vierter Kantenabstand 122 der Rillenkanten 6 verringert sich im äußeren Übergangsabschnitt 120 und/oder im inneren Übergangsabschnitt 140, bevorzugt zumindest im inneren Übergangsabschnitt 140, von axial außen nach axial innen jeweils kontinuierlich, bevorzugt linear oder s-förmig, und/oder diskontinuierlich, insbesondere in einem einzigen Sprung. In der Fig. 1 und Fig. 1A ist eine lineare Verringerung des vierten Kantenabstandes 122 im inneren Übergangsabschnitt 140 dargestellt.

Die radiale Rillentiefe T, siehe z.B. die Figuren 2 bis 5, ist im mittleren Abschnitt 130 und im inneren Abschnitt 150 um mindestens 1 mm bis 3 mm größer als im äußeren Abschnitt 110. Zudem ist bevorzugt wie dargestellt die radiale Rillentiefe T zudem im mittleren Abschnitt 130 geringer ist als im inneren Abschnitt 150.

Der zweite Kantenabstand 132, siehe z.B. Fig. 2 und Fig. 1A, beträgt im mittleren Abschnitt 130 1,8 mm bis 2,0 mm, bevorzugt 1,9 mm. Der dritte Kantenabstand 152, siehe z.B. Fig. 3, beträgt im inneren Abschnitt 150 2,5 mm bis 2,9 mm, bevorzugt 2,7 mm.

Die erste Rillenbreite 111, siehe z.B. Fig. 4 und Fig. 1A, im äußeren Abschnitt 110 beträgt 0,5 mm bis 0,6 mm. Die zweite Rillenbreite 131, siehe z.B. Fig. 1A, 2 und 3, im mittleren Abschnitt 130 und im inneren Abschnitt 150 beträgt 0,8 mm bis 1,0 mm.

Wie in der Fig. 4 dargestellt, endet die Rille im äußeren Abschnitt 110 radial innerhalb an die Rillenwände 4 anschließend in einem Rillengrund 19 verjüngt.

Die Rille 3 weitet sich radial innerhalb der Rillenwände 4 zumindest im mittleren Abschnitt 130 sowie bis zur axial innen begrenzenden Umfangsrille 1b in einen Kanal 18 auf, der sich zur axial innen begrenzenden Umfangsrille 1b hin aufweitet. Dies ist in den Figuren 2, 3 und 5 dargestellt.

Die Rille kann aber im mittleren und inneren Abschnitt auch radial innerhalb an die Rillenwände 4 anschließend in einem Rillengrund 19 verjüngt enden.

Der äußere Übergangsabschnitt 120 ist als lokale Verdickung 20 der Rille ausgebildet, wobei sich die lokale Verdickung 20 von einer Öffnung 9 der Laufstreifenoberfläche 5 bis zu dem Kanal 18 erstreckt und, insbesondere knickfrei, in diesen mündet, siehe Fig. 5. In der Fig. 1 und Fig. 1A ist der Einfachheit halber nur die Öffnung 9 der lokalen Verdickung 20 zur Laufstreifenoberfläche 5 dargestellt.

Das Profilband 2 weist einen Einschnitt 21 auf, welcher eine der beiden dargestellten Rillen 3, bevorzugt im äußeren Übergangsabschnitt 120, besonders bevorzugt wie dargestellt in der lokalen Verdickung 20, schneidet, weitgehend in Umfangsrichtung U verläuft und dabei vor der benachbarten Rille 3 endet. Der Einschnitt 21 kann eine Tiefe von 1 mm bis 3 mm, bevorzugt von 1,2 mm bis 1,8 mm, besonders bevorzugt von 1,5 mm, aufweisen.

Die axial außen begrenzende Umfangsrille 1a begrenzt ein äußeres weiteres Profilband 221, welches eine geschlossene Wand zu der axial außen begrenzenden Umfangsrille 1a aufweist. Das äußere weitere Profilband 221 weist somit keine in die axial außen begrenzende Umfangsrille 1a mündenden Einkerbungen auf. Das äußere weitere Profilband 221 kann ein axial äußerstes Profilband, insbesondere eine Schulterrippe, sein.

Die axial innen begrenzende Umfangsrille 1b begrenzt ein inneres weiteres Profilband 222 mit zumindest einem in die axial innen begrenzende Umfangsrille 1a mündenden Einkerbung 15, wobei die Einkerbung 15 in Umfangsrichtung U insbesondere zwischen den Einmündungen 16 von zwei aufeinanderfolgenden Rillen 3 in die das Profilband 2 axial innen begrenzende Umfangsrille 1b mündet.

Die Erfindung ist auf die beschriebenen Ausführungsvarianten nicht beschränkt.

Der Kanal 18 kann alternativ derart ausgeführt sein, dass er den Rillengrund 19 der Rille 3 nicht mitbildet, sondern zu diesem in radialer Richtung rR einen Abstand von insbesondere mindestens 1,0 mm aufweist.

Bei dem Reifen handelt es sich um einen Fahrzeugluftreifen, insbesondere radialer Bauart. Bevorzugt handelt es sich dabei um einen PKW-, Van- oder Light-Truck Reifen oder einen Zweiradreifen.

### Bezugszeichenliste

### (Teil der Beschreibung)

- 1a: axial außen begrenzende Umfangsrille
- 1b: axial innen begrenzende Umfangsrille
- 2: Umfangsrippe
- 3: Rille
- 4: Rillenwand
- 5: Laufstreifenoberfläche
- 6: Rillenkante
- 7: Rillenverbreiterung
- 8: Länge der Rille
- 9: Öffnung
- 14: radiale Tiefe
- 15: Einkerbung
- 16: Einmündung der Rille
- 17: Winkel
- 18: Kanal
- 19: Rillengrund
- 20: Verdickung
- 21: Einschnitt
- 100: erste Länge
- 101: zweite Länge
- 110: äußerer Abschnitt
- 120: äußerer Übergangsabschnitt
- 130: mittlerer Abschnitt
- 140: innerer Übergangsabschnitt
- 150: innerer Abschnitt
- 111: erste Breite im äußeren Abschnitt
- 131: zweite Breite
- 122: vierter Kantenabstand
- 132: zweiter Kantenabstand im mittleren Abschnitt
- 152: dritte Kantenabstand im inneren Abschnitt
- 221: äußeres weiteres Profilband
- 222: inneres weiteres Profilband
- T: radiale Rillentiefe
- T*: Profiltiefe
- aR: axiale Richtung
- U: Umfangsrichtung
- rR: radiale Richtung

## Patentansprüche

1. Fahrzeugluftreifen aufweisend einen profilierten Laufstreifen mit zumindest einem von zwei Umfangsrillen (1a, 1b) axial begrenzten schulterseitigen Profilband (2), bevorzugt ausgeführt als eine Umfangsrippe (2) oder als eine Profilblockreihe, welches zumindest eine in die beiden axial begrenzenden Umfangsrillen (1a, 1b) in jeweils einer Einmündung (16) mündende Rille (3) mit einer radialen Rillentiefe T von weniger als 100 % einer Profiltiefe T* aufweist,
• wobei die Rille (3) zwei in radialer Richtung rR ausgerichtete einander gegenüberliegende Rillenwände (4) aufweist und radial außen in Rillenkanten (6) an einer Laufstreifenoberfläche (5) endet, wobei
▪ die Rille (3) in ihrer axialen Erstreckung von axial außen nach axial innen aus den folgenden fünf Abschnitten gebildet ist:
∘ ein äußerer Abschnitt (110) angrenzend an die axial außen begrenzende Umfangsrille (1a) der Umfangsrillen,
∘ ein äußerer Übergangsabschnitt (120),
∘ ein mittlerer Abschnitt (130),
∘ ein innerer Übergangsabschnitt (140),
∘ ein innerer Abschnitt (150) angrenzend an die axial innen begrenzende Umfangsrille (1b) der Umfangsrillen, **dadurch gekennzeichnet, dass**
∘ der äußere Abschnitt (110), der mittlere Abschnitt (130) sowie der innere Abschnitt (150) jeweils eine erste Länge (100) von 20% bis 40%, bevorzugt von 25% bis 35%, einer Länge (8) der Rille (3) aufweisen und
∘ dass der äußere Übergangsabschnitt (120) und der innere Übergangsabschnitt (140) jeweils eine zweite Länge (101) von 0% bis 10% der Länge (8) der Rille aufweisen,
▪ dass die Rille (3) im äußeren Abschnitt (110) eine konstante erste Rillenbreite (111) von 0,4 mm bis 1,0 mm aufweist,
▪ dass die Rille (3) einen im mittleren Abschnitt (130) und im inneren Abschnitt (150) eine gleiche konstante zweite Rillenbreite (131) von 0,6 mm bis 1,2 mm aufweist, welche um mindestens 0,2 mm größer ist als die erste Rillenbreite (111),
▪ dass die Rillenwände (4) im äußeren Abschnitt (110) radial außen mit der jeweiligen Rillenkante (6) abschließen,
▪ dass die Rille (3) im mittleren Abschnitt (130) und im inneren Abschnitt (150) jeweils eine an die Rillenwände (4) radial außen anschließende die Rille zur Laufstreifenoberfläche (5) aufweitende Rillenverbreiterung (7) aufweist, welche radial außen mit den Rillenkanten (6) abschließt und
▪ dass die Rillenkanten (6) im mittleren Abschnitt (130) einen konstanten zweiten Kantenabstand (132) von 1,6 mm bis 2,2 mm aufweisen, der um 0,5 mm bis 1,5 mm kleiner ist als ein konstanter dritter Kantenabstand (152) von 2,2 mm bis 3,2 mm der Rillenkanten (6) im inneren Abschnitt (150).

2. Fahrzeugluftreifen gemäß Anspruch 1, **dadurch gekennzeichnet, dass** die Rillenverbreiterung (7) im inneren Abschnitt (150) und/oder im mittleren Abschnitt (130) symmetrisch zur Längserstreckung der Rille (3) ausgebildet sind.

3. Fahrzeugluftreifen gemäß zumindest einem der vorhergehenden Ansprüche, **dadurch gekennzeichnet, dass** sich die Rillenverbreiterung (7) bis zu einer, über die Längserstreckung der Rille insbesondere konstanten, radialen Tiefe (14) von 0,8 mm bis 1,5 mm, bevorzugt von 0,8 mm bis 1,2 mm, besonders bevorzugt von 1,0 mm, erstreckt.

4. Fahrzeugluftreifen gemäß zumindest einem der vorhergehenden Ansprüche, **dadurch gekennzeichnet, dass** sich ein vierter Kantenabstand (122) der Rillenkanten (6) im äußeren Übergangsabschnitt (120) und/oder im inneren Übergangsabschnitt (140), bevorzugt zumindest im inneren Übergangsabschnitt (140), von axial außen nach axial innen jeweils kontinuierlich, bevorzugt linear oder s-förmig, und/oder diskontinuierlich, insbesondere in einem einzigen Sprung, verringert.

5. Fahrzeugluftreifen gemäß zumindest einem der vorhergehenden Ansprüche, **dadurch gekennzeichnet, dass** die radiale Rillentiefe T im mittleren Abschnitt (130) und im inneren Abschnitt (150) um mindestens 1 mm bis 3 mm größer ist als im äußeren Abschnitt (110), bevorzugt die radiale Rillentiefe T zudem im mittleren Abschnitt (130) geringer ist als im inneren Abschnitt (150).

6. Fahrzeugluftreifen gemäß zumindest einem der vorhergehenden Ansprüche, **dadurch gekennzeichnet, dass** der zweite Kantenabstand (132) im mittleren Abschnitt (130) 1,8 mm bis 2,0 mm, bevorzugt 1,9 mm, beträgt und/oder dass der dritte Kantenabstand (152) im inneren Abschnitt (150) 2,5 mm bis 2,9 mm, bevorzugt 2,7 mm beträgt.

7. Fahrzeugluftreifen gemäß zumindest einem der vorhergehenden Ansprüche, **dadurch gekennzeichnet, dass** die erste Rillenbreite (111) im äußeren Abschnitt (110) 0,5 mm bis 0,6 mm beträgt und/oder dass die zweite Rillenbreite (131) im mittleren Abschnitt (130) und im inneren Abschnitt (150) 0,8 mm bis 1,0 mm beträgt.

8. Fahrzeugluftreifen gemäß zumindest einem der vorhergehenden Ansprüche, **dadurch gekennzeichnet, dass** sich die Rille im äußeren Abschnitt (110) oder im äußeren, mittleren und inneren Abschnitt (110,130,150) radial innerhalb an die Rillenwände (4) anschließend in einem Rillengrund (19) endend verjüngt.

9. Fahrzeugluftreifen gemäß zumindest einem der vorhergehenden Ansprüche, **dadurch gekennzeichnet, dass** sich die Rille (3) radial innerhalb der Rillenwände (4) zumindest im mittleren Abschnitt (130) sowie bis zur axial innen begrenzenden Umfangsrille (1b) in einen Kanal (18) aufweitet, der sich bevorzugt zur axial innen begrenzenden Umfangsrille (1b) hin aufweitet.

10. Fahrzeugluftreifen gemäß zumindest des vorhergehenden Anspruchs, **dadurch gekennzeichnet, dass** der äußere Übergangsabschnitt (120) als lokale Verdickung (20) der Rille ausgebildet ist, die sich von einer Öffnung (9) der Laufstreifenoberfläche (5) bis zu dem Kanal (18) erstreckt und, insbesondere knickfrei, in diesen mündet.

11. Fahrzeugluftreifen gemäß zumindest einem der vorhergehenden Ansprüche, **dadurch gekennzeichnet, dass** das Profilband (2) einen Einschnitt (21) aufweist, welcher die Rille (3), insbesondere im äußeren Übergangsabschnitt (120), schneidet, weitgehend in Umfangsrichtung U verläuft und dabei vor einer benachbarten Vertiefung, insbesondere Rille (3), endet.

12. Fahrzeugluftreifen gemäß zumindest einem der vorhergehenden Ansprüche, **dadurch gekennzeichnet, dass** die axial außen begrenzende Umfangsrille (1a) ein äußeres weiteres Profilband (221) begrenzt, welches eine geschlossene Wand zu der begrenzenden Umfangsrille (1a) aufweist.

13. Fahrzeugluftreifen gemäß zumindest einem der vorhergehenden Ansprüche, **dadurch gekennzeichnet, dass** die axial innen begrenzende Umfangsrille (1b) ein inneres weiteres Profilband (222) mit zumindest einem in die axial innen begrenzende Umfangsrille (1a) mündenden Einkerbung (15) begrenzt, wobei die Einkerbung (15) in Umfangsrichtung U insbesondere zwischen den Einmündungen (16) von zwei aufeinanderfolgenden Rillen (3) in die das Profilband (2) axial innen begrenzende Umfangsrille (1b) mündet.

## Claims

1. Pneumatic vehicle tyre having a profiled tread with at least one shoulder-side profile strip (2) which is axially delimited by two circumferential grooves (1a, 1b), is preferably embodied as a circumferential rib (2) or as a row of profile blocks and has at least one groove (3) which opens out into the two axially delimiting circumferential grooves (1a, 1b) in each case in a mouth (16) and has a radial groove depth T of less than 100% of a profile depth T*,
• wherein the groove (3) has two mutually opposite groove walls (4), which are aligned in the radial direction rR, and ends radially outside in groove edges (6) on a tread surface (5), wherein
■ the groove (3) is formed in its axial extent from axially outside to axially inside by the following five portions:
∘ an outer portion (110) adjoining the axially outwardly delimiting circumferential groove (1a) of the circumferential grooves,
∘ an outer transitional portion (120),
∘ a middle portion (130),
∘ an inner transitional portion (140),
∘ an inner portion (150) adjoining the axially inwardly delimiting circumferential groove (1b) of the circumferential grooves,
**characterized in that**
∘ the outer portion (110), the middle portion (130) and the inner portion (150) each have a first length (100) of 20% to 40%, preferably of 25% to 35%, of a length (8) of the groove (3), and
∘ **in that** the outer transitional portion (120) and the inner transitional portion (140) each have a second length (101) of 0% to 10% of the length (8) of the groove,
▪ **in that** the groove (3) has in the outer portion (110) a constant first groove width (111) of 0.4 mm to 1.0 mm,
▪ **in that** the groove (3) has in the middle portion (130) and in the inner portion (150) a same constant second groove width (131) of 0.6 mm to 1.2 mm, which is greater than the first groove width (111) by at least 0.2 mm,
▪ **in that** in the outer portion (110) the groove walls (4) terminate radially on the outside with the respective groove edge (6),
▪ **in that** the groove (3) has in the middle portion (130) and in the inner portion (150) in each case a groove widening (7) which adjoins the groove walls (4) radially on the outside, widens the groove to the tread surface (5) and terminates radially on the outside with the groove edges (6), and
▪ **in that** the groove edges (6) in the middle portion (130) have a constant second distance between edges (132) of 1.6 mm to 2.2 mm, which is smaller by 0.5 mm to 1.5 mm than a constant third distance between edges (152) of 2.2 mm to 3.2 mm of the groove edges (6) in the inner portion (150).

2. Pneumatic vehicle tyre according to Claim 1, **characterized in that** in the inner portion (150) and/or in the middle portion (130) the groove widening (7) is formed symmetrically with respect to the longitudinal extent of the groove (3).

3. Pneumatic vehicle tyre according to at least one of the preceding claims, **characterized in that** the groove widening (7) extends to a radial depth (14) of 0.8 mm to 1.5 mm, preferably of 0.8 mm to 1.2 mm, particularly preferably of 1.0 mm, which is in particular constant over the longitudinal extent of the groove.

4. Pneumatic vehicle tyre according to at least one of the preceding claims, **characterized in that** a fourth distance between edges (122) of the groove edges (6) in the outer transitional portion (120) and/or in the inner transitional portion (140), preferably at least in the inner transitional portion (140), reduces from axially outside to axially inside in each case continuously, preferably linearly or s-shaped, and/or discontinuously, in particular in a single jump.

5. Pneumatic vehicle tyre according to at least one of the preceding claims, **characterized in that** the radial groove depth T is greater in the middle portion (130) and in the inner portion (150) than in the outer portion (110) by at least 1 mm to 3 mm, preferably the radial groove depth T is additionally smaller in the middle portion (130) than in the inner portion (150).

6. Pneumatic vehicle tyre according to at least one of the preceding claims, **characterized in that** the second distance between edges (132) in the middle portion (130) is 1.8 mm to 2.0 mm, preferably 1.9 mm, and/or **in that** the third distance between edges (152) in the inner portion (150) is 2.5 mm to 2.9 mm, preferably 2.7 mm.

7. Pneumatic vehicle tyre according to at least one of the preceding claims, **characterized in that** the first groove width (111) in the outer portion (110) is 0.5 mm to 0.6 mm and/or **in that** the second groove width (131) in the middle portion (130) and in the inner portion (150) is 0.8 mm to 1.0 mm.

8. Pneumatic vehicle tyre according to at least one of the preceding claims, **characterized in that** in the outer portion (110) or in the outer, middle and inner portions (110, 130, 150) the groove narrows where it adjoins the groove walls (4) radially on the inside, ending in a groove base (19).

9. Pneumatic vehicle tyre according to at least one of the preceding claims, **characterized in that** the groove (3) widens radially within the groove walls (4), at least in the middle portion (130) and as far as the axially inwardly delimiting circumferential groove (1b), into a channel (18) which preferably widens towards the axially inwardly delimiting circumferential groove (1b).

10. Pneumatic vehicle tyre according to at least the preceding claim, **characterized in that** the outer transitional portion (120) is in the form of a local thickening (20) of the groove that extends from an opening (9) in the tread surface (5) as far as the channel (18) and opens into the latter, in particular without a kink.

11. Pneumatic vehicle tyre according to at least one of the preceding claims, **characterized in that** the profile strip (2) has a sipe (21) which intersects the groove (3), in particular in the outer transitional portion (120), runs largely in the circumferential direction U and ends in front of an adjacent depression, in particular groove (3).

12. Pneumatic vehicle tyre according to at least one of the preceding claims, **characterized in that** the axially outwardly delimiting circumferential groove (1a) delimits an outer further profile strip (221) which has a closed wall with respect to the delimiting circumferential groove (1a).

13. Pneumatic vehicle tyre according to at least one of the preceding claims, **characterized in that** the axially inwardly delimiting circumferential groove (1b) delimits an inner further profile strip (222) with at least one notch (15) opening out into the axially inwardly delimiting circumferential groove (1a), wherein the notch (15) opens out in the circumferential direction U, in particular between the mouths (16) of two successive grooves (3), into the circumferential groove (1b) delimiting the profile strip (2) axially on the inside.

## Revendications

1. Pneumatique de véhicule présentant une bande de roulement profilée comprenant au moins une bande de profil (2) côté épaulement, délimitée axialement par deux rainures circonférentielles (1a, 1b), de préférence réalisée sous la forme d'une nervure circonférentielle (2) ou d'une rangée de blocs de profil, laquelle présente au moins une rainure (3) débouchant dans chacune des deux rainures circonférentielles (1a, 1b) qui la délimitent axialement au niveau d'un débouché (16) respectif et ayant une profondeur radiale de rainure T inférieure à 100 % d'une profondeur de profil T*,
• dans lequel la rainure (3) présente deux parois de rainure (4) opposées l'une à l'autre et orientées dans la direction radiale rR, et se termine radialement à l'extérieur par des arêtes de rainure (6) au niveau d'une surface de bande de roulement (5), dans lequel
▪ la rainure (3), dans son étendue axiale de l'extérieur axial vers l'intérieur axial, est formée des cinq sections suivantes :
∘ une section extérieure (110) adjacente à la rainure circonférentielle (1a), délimitant axialement à l'extérieur, parmi les rainures circonférentielles,
∘ une section de transition extérieure (120),
∘ une section médiane (130),
∘ une section de transition intérieure (140),
∘ une section intérieure (150) adjacente à la rainure circonférentielle (1b), délimitant axialement à l'intérieur, parmi les rainures circonférentielles,
**caractérisé en ce que**
∘ la section extérieure (110), la section médiane (130) ainsi que la section intérieure (150) présentent chacune une première longueur (100) de 20 % à 40 %, de préférence de 25 % à 35 %, d'une longueur (8) de la rainure (3), et
∘ la section de transition extérieure (120) et la section de transition intérieure (140) présentent chacune une deuxième longueur (101) de 0 % à 10 % de la longueur (8) de la rainure,
▪ la rainure (3) présente, dans la section extérieure (110), une première largeur de rainure (111) constante de 0,4 mm à 1,0 mm,
▪ la rainure (3) présente, dans la section médiane (130) et dans la section intérieure (150), une même deuxième largeur de rainure (131) constante de 0,6 mm à 1,2 mm, qui est supérieure d'au moins 0,2 mm à la première largeur de rainure (111),
▪ les parois de rainure (4), dans la section extérieure (110), se terminent radialement à l'extérieur au niveau de l'arête de rainure (6) respective,
▪ la rainure (3), dans la section médiane (130) et dans la section intérieure (150), présente respectivement un élargissement de rainure (7) qui se raccorde radialement à l'extérieur aux parois de rainure (4) et élargit la rainure vers la surface de bande de roulement (5), lequel se termine radialement à l'extérieur au niveau des arêtes de rainure (6), et
▪ les arêtes de rainure (6), dans la section médiane (130), présentent un deuxième écartement d'arêtes (132) constant de 1,6 mm à 2,2 mm, qui est inférieur de 0,5 mm à 1,5 mm à un troisième écartement d'arêtes (152) constant de 2,2 mm à 3,2 mm des arêtes de rainure (6) dans la section intérieure (150).

2. Pneumatique de véhicule selon la revendication 1, **caractérisé en ce que** l'élargissement de rainure (7), dans la section intérieure (150) et/ou dans la section médiane (130), est réalisé symétriquement par rapport à l'étendue longitudinale de la rainure (3).

3. Pneumatique de véhicule selon au moins l'une des revendications précédentes, **caractérisé en ce que** l'élargissement de rainure (7) s'étend jusqu'à une profondeur radiale (14) de 0,8 mm à 1,5 mm, de préférence de 0,8 mm à 1,2 mm, de manière particulièrement préférée de 1,0 mm, notamment constante sur l'étendue longitudinale de la rainure.

4. Pneumatique de véhicule selon au moins l'une des revendications précédentes, **caractérisé en ce qu'**un quatrième écartement d'arêtes (122) des arêtes de rainure (6), dans la section de transition extérieure (120) et/ou dans la section de transition intérieure (140), de préférence au moins dans la section de transition intérieure (140), diminue respectivement de manière continue, de préférence linéairement ou en forme de S, et/ou de manière discontinue, notamment en un seul saut, de l'extérieur axial vers l'intérieur axial.

5. Pneumatique de véhicule selon au moins l'une des revendications précédentes, **caractérisé en ce que** la profondeur radiale de rainure T dans la section médiane (130) et dans la section intérieure (150) est supérieure d'au moins 1 mm à 3 mm à celle dans la section extérieure (110), de préférence la profondeur radiale de rainure T étant en outre plus faible dans la section médiane (130) que dans la section intérieure (150).

6. Pneumatique de véhicule selon au moins l'une des revendications précédentes, **caractérisé en ce que** le deuxième écartement d'arêtes (132) dans la section médiane (130) est de 1,8 mm à 2,0 mm, de préférence de 1,9 mm, et/ou **en ce que** le troisième écartement d'arêtes (152) dans la section intérieure (150) est de 2,5 mm à 2,9 mm, de préférence de 2,7 mm.

7. Pneumatique de véhicule selon au moins l'une des revendications précédentes, **caractérisé en ce que** la première largeur de rainure (111) dans la section extérieure (110) est de 0,5 mm à 0,6 mm et/ou **en ce que** la deuxième largeur de rainure (131) dans la section médiane (130) et dans la section intérieure (150) est de 0,8 mm à 1,0 mm.

8. Pneumatique de véhicule selon au moins l'une des revendications précédentes, **caractérisé en ce que** la rainure, dans la section extérieure (110) ou dans les sections extérieure, médiane et intérieure (110, 130, 150), se rétrécit radialement vers l'intérieur dans le prolongement des parois de rainure (4) et se termine par un fond de rainure (19).

9. Pneumatique de véhicule selon au moins l'une des revendications précédentes, **caractérisé en ce que** la rainure (3), radialement à l'intérieur des parois de rainure (4), s'élargit, au moins dans la section médiane (130) ainsi que jusqu'à la rainure circonférentielle (1b) la délimitant axialement à l'intérieur, pour former un canal (18), qui s'élargit de préférence en direction de la rainure circonférentielle (1b) la délimitant axialement à l'intérieur.

10. Pneumatique de véhicule selon au moins la revendication précédente, **caractérisé en ce que** la section de transition extérieure (120) est réalisée sous la forme d'un épaississement local (20) de la rainure, qui s'étend depuis une ouverture (9) de la surface de bande de roulement (5) jusqu'au canal (18) et débouche dans celui-ci, notamment sans coude.

11. Pneumatique de véhicule selon au moins l'une des revendications précédentes, **caractérisé en ce que** la bande de profil (2) présente une incision (21) qui coupe la rainure (3), notamment dans la section de transition extérieure (120), s'étend sensiblement dans la direction circonférentielle U et se termine alors avant un évidement adjacent, notamment une rainure (3).

12. Pneumatique de véhicule selon au moins l'une des revendications précédentes, **caractérisé en ce que** la rainure circonférentielle (1a) délimitant axialement à l'extérieur délimite une autre bande de profil extérieure (221), laquelle présente une paroi fermée vers la rainure circonférentielle (1a) qui la délimite.

13. Pneumatique de véhicule selon au moins l'une des revendications précédentes, **caractérisé en ce que** la rainure circonférentielle (1b) délimitant axialement à l'intérieur délimite une autre bande de profil intérieure (222) présentant au moins une encoche (15) débouchant dans la rainure circonférentielle (1a) délimitant axialement à l'intérieur, l'encoche (15) débouchant, dans la direction circonférentielle U, notamment entre les débouchés (16) de deux rainures (3) successives dans la rainure circonférentielle (1b) délimitant axialement à l'intérieur la bande de profil (2).
